# FASCICULE DE BREVET EUROPEEN

(11) **EP 1 340 060 B1**
(45) Date de publication et mention de la délivrance du brevet: **09.07.2008**
(21) Numéro de dépôt: 01998801.3
(22) Date de dépôt: 30.11.2001
(51) Int. Cl.: G01K 7/02

(54) **PROCEDE DE FABRICATION DE CONVERTISSEURS THERMO-ELECTRIQUES**
VERFAHREN ZUR HERSTELLUNG THERMOELEKTRISCHER UMSETZER
METHOD FOR MAKING THERMO-ELECTRIC CONVERTERS

(30) Priorité: 01.12.2000 FR 0015704
(43) Date de publication de la demande: 03.09.2003
(73) Titulaire: Institut Français du Pétrole, 92852 Rueil-Malmaison Cedex (FR); Serras, Edouard, 92200 Neuilly-sur-Seine (FR)
(72) Inventeur: SERRAS, Edouard, F-92200 Neuilly sur Seine (FR)
(74) Mandataire: Ramey, Daniel
(86) Numéro de dépôt international: PCT/FR2001/003789
(87) Numéro de publication internationale: WO 2002/044676

(56) Documents cités:
- DE-A- 1 773 155
- DE-A- 3 237 912
- FR-A- 2 080 153

## Description

La présente invention concerne un procédé de fabrication de convertisseurs thermo-électriques comprenant une pluralité de thermocouples en série formés par des fils électroconducteurs de deux natures différentes, et elle concerne également les convertisseurs thermo-électriques obtenus par exécution de ce procédé.

On connaît des convertisseurs thermo-électriques formés d'une pluralité de thermocouples reliés en série, dont les jonctions à leurs extrémités opposées sont mises en contact respectivement avec une source chaude et avec une source froide, pour produire une force électromotrice qui dépend de la différence de température entre les jonctions chaudes et les jonctions froides et du nombre de thermocouples reliés en série.

On connaît aussi, par le document FR 2 080 153 A, des rubans de thermocouples reliées en série, constitués par un tissage de fils conducteurs avec des fils isolants. Pour augmenter la puissance électrique utile produite par un tel convertisseur thermoélectrique, on est amené, entre autres, à augmenter le nombre de thermocouples et donc à rechercher des procédés de fabrication permettant d'obtenir, de façon économique, rapide et fiable, des ensembles comprenant un nombre élevé de thermocouples reliés en série.

L'invention a notamment pour but de répondre à ce besoin.

Elle propose à cet effet un procédé de fabrication de convertisseurs thermo-électriques comprenant des pluralités de thermocouples en série, formés par tissage de fils électroconducteurs de deux natures différentes, parallèles et disposés en alternance, avec des fils de matière électriquement isolante, caractérisé en ce qu'il consiste, à des intervalles prédéterminés le long des fils électroconducteurs, à rapprocher les fils électroconducteurs deux à deux, à les souder dans leurs zones de contact et à les couper au niveau des soudures pour obtenir des bandes parallèles de tissu dans lesquelles les extrémités des fils électroconducteurs sont reliées en série et forment les jonctions des thermocouples.

Dans un mode de réalisation préféré de l'invention, les fils électroconducteurs sont les fils de trame, et les fils de matière électriquement isolante sont les fils de chaîne du tissage.

Le procédé de tissage selon l'invention est rapide et permet, en disposant côte à côte un grand nombre de fils de chaîne, de former une pluralité de bandes parallèles tissées comprenant chacune une pluralité de thermocouples reliés en série. L'espacement des fils de chaîne isolants réduit leur nombre et facilite le tissage.

Avantageusement, des fils d'une matière électriquement isolante et non glissante sur les fils électroconducteurs sont intercalés dans les fils isolants, à intervalles réguliers. Leur friction sur les fils électroconducteurs permet de rapprocher ces fils et de les maintenir en place pour les opérations de soudure et de coupe, notamment lorsque les autres fils isolants sont en fibres de verre et glissent facilement sur les fils électroconducteurs.

De préférence, les parties des fils électroconducteurs qui sont soudées deux à deux et coupées pour former les jonctions des thermocouples, sont entre deux de ces fils électriquement isolants et non glissants qui sont séparés d'une distance prédéterminée, par exemple de quelques millimètres, suffisante pour la soudure et la coupe des fils électroconducteurs.

Avantageusement, on rapproche deux fils électroconducteurs, dans leur zone souhaitée de contact, en les faisant passer d'un même côté d'un ou de deux fils précités de matière isolante et non glissante, lors de l'introduction des fils de trame dans la chaîne du tissage.

Les soudures des fils électroconducteurs dans leurs zones de contact sont réalisées de préférence par une soudure laser ou par un arc électrique. On peut notamment effectuer cette soudure de façon automatique, en faisant passer les parties en contact des fils de trame entre des électrodes reliées à une source d'énergie électrique, le passage des fils de trame entre les électrodes déclenchant un arc électrique qui soude et coupe les fils en contact.

En disposant deux rangées d'électrodes de part et d'autre du tissu formé des fils de chaîne et des fils de trame précités, dans la direction de la trame, et en faisant avancer le tissu entre ces rangées d'électrodes, on réalise automatiquement et simultanément toutes les soudures et les coupes, sur une même ligne de trame, des fils de trame de toutes les bandes parallèles tissées destinées à former des convertisseurs thermoélectriques.

En variante, les soudures des fils de trame sont réalisées par soudure au plasma, ou autre.

Après soudure et coupe des fils électroconducteurs, les bandes obtenues sont enroulées ou pliées sur elles-mêmes et coupées à longueur, en étant préalablement recouvertes d'une couche ou d'une feuille de matière électriquement isolante et résistante à la chaleur, par exemple d'une nappe de fibres de verre.

Avant enroulement ou pliage, les extrémités soudées des fils de trame peuvent être recouvertes d'un produit électriquement isolant tel que de la cire ou un vernis par exemple. On peut alors enrouler ou plier la bande de thermocouples, sans la recouvrir d'une nappe ou feuille isolante.

Les bandes enroulées ou pliées sont ensuite placées dans des enveloppes de matière électriquement isolante et résistante à la chaleur, et les extrémités soudées des fils électroconducteurs sont noyées dans des couches de matière électriquement isolante et résistant à la chaleur.

En variante, les bandes enroulées ou pliées sont imprégnées sous vide d'une matière thermiquement et électriquement isolante, du type céramique.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement une fabrication par tissage des bandes de thermocouples selon l'invention ;
- la figure 2 représente schématiquement des moyens de soudure ;
- la figure 3 est une vue partielle agrandie des moyens de soudure ;
- la figure 4 est une vue partielle à grande échelle d'une partie du tissu avant et après soudure;
- la figure 5 est une vue correspondant à la figure 4 et représente une variante de réalisation ;
- la figure 6 illustre schématiquement une étape finale du tissage selon l'invention ;
- la figure 7 est une vue schématique en coupe axiale d'un convertisseur thermoélectrique selon l'invention.

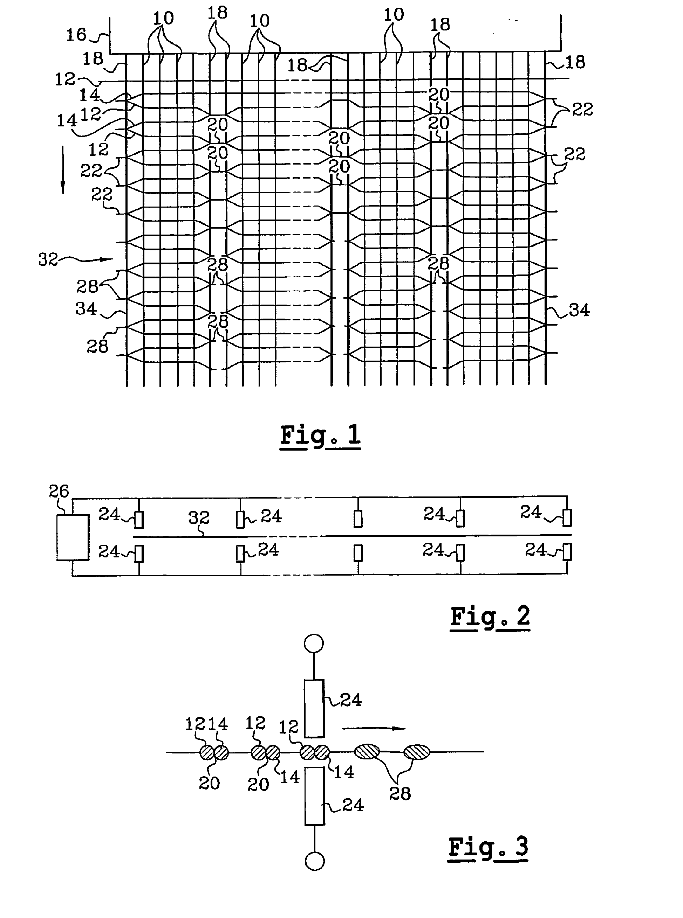

On a illustré schématiquement en figure 1 les principales étapes d'un procédé de tissage selon l'invention, dans lequel des fils de chaîne 10 en une matière électriquement isolante telle que de la fibre de verre, sont tissés avec des fils de trame électroconducteurs 12, 14 de deux natures différentes, qui sont amenés en alternance dans la chaîne. Ces fils électroconducteurs 12, 14 sont destinés à être soudés entre eux à intervalles réguliers sur toute la largeur du tissage pour former des thermocouples dans une pluralité de bandes parallèles qui s'étendent dans la longueur du tissage et qui sont juxtaposées transversalement dans la largeur du tissage.

Au cours du tissage, les fils de chaîne 10 sont soumis à une tension longitudinale constante prédéterminée, tandis que les fils de trame 12, 14 qui sont introduits en alternance dans la chaîne de tissage sont coupés à l'extérieur de la chaîne et ont une longueur qui est légèrement supérieure à la largeur de tissage, de façon à dépasser légèrement de part et d'autre de la chaîne.

Pour être soudés entre eux à intervalles réguliers, les fils de trame doivent être rapprochés deux à deux dans les zones souhaitées de soudure.

Selon l'invention, ce rapprochement est réalisé au moyen de fils de chaîne 18 ayant de préférence un plus grand diamètre qui sont intercalés à intervalles réguliers dans les fils 10 de fibre de verre et qui sont en une matière électriquement isolante et non glissante sur les fils de trame 12, 14, les fils 18 étant par exemple en une matière plastique telle que du polyéthylène.

Ces fils 18 sont tissés avec des paires de fils de trame 12, 14 et non avec des fils de trame individuels, de sorte que chaque fil de chaîne 18 passe sur une paire de fils de trame 12, 14, sous la paire suivante de fils de trame 12, 14, sur la paire suivante de fils de trame 12, 14, etc.

Ce tissage a pour effet de rapprocher les deux fils 12, 14 d'une paire de fils de trame, en raison de la tension longitudinale appliquée au fil 18, de son diamètre supérieur et de l'absence de tension longitudinale des fils de trame 12, 14. Ce rapprochement amène les deux fils de trame 12, 14 au contact l'un de l'autre à l'endroit où passe le fil de chaîne 18.

Pour bien délimiter une zone de soudure des deux fils de trame 12, 14 d'une paire, on peut avantageusement prévoir deux fils 18 l'un à côté de l'autre dans la chaîne du tissage, comme représenté schématiquement en figure 1, et réaliser la soudure entre les deux fils 18.

Les deux fils de trame 12, 14 de chaque paire sont rapprochés ainsi l'un de l'autre comme représenté en 20 en figure 1 entre deux fils de chaîne 18 consécutifs.

Aux extrémités latérales de la chaîne, les extrémités des fils de trame 12, 14 sont également rapprochées l'une de l'autre, comme représenté en 22, par un fil 18 de polyéthylène, ou bien par deux fils 18 consécutifs espacés d'une distance faible prédéterminée.

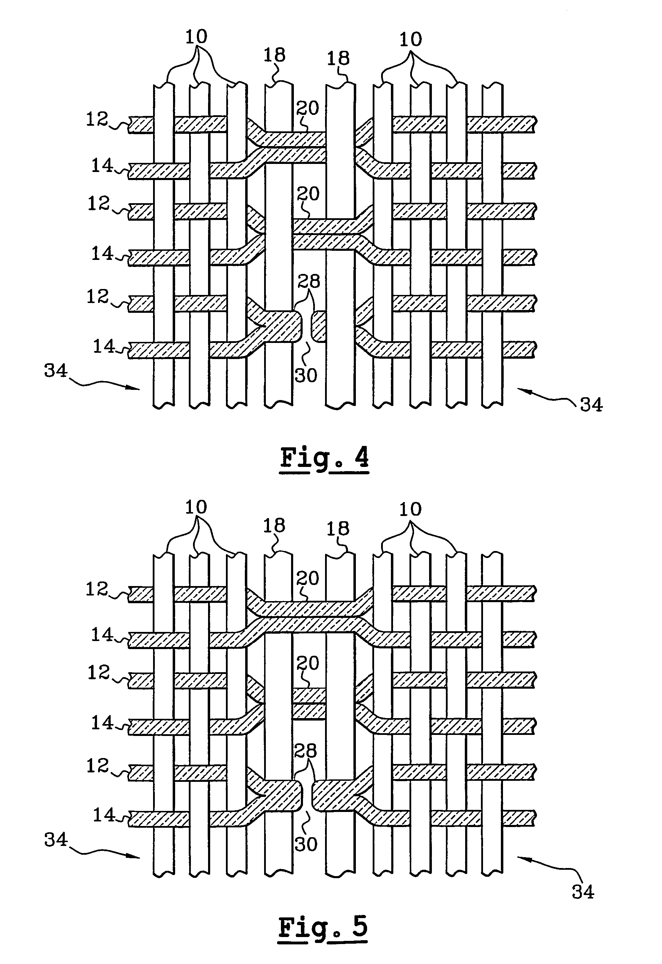

Comme représenté à plus grande échelle en figure 4, les deux fils 18 consécutifs qui permettent de rapprocher deux fils de trame 12, 14 pour former une zone de contact 20 entre les deux fils, peuvent passer le premier sous les deux fils et le second au-dessus de ces deux fils. Au niveau de la paire suivante de fils de trame 12, 14, le premier fil 18 passe au-dessus des deux fils de trame et le second au-dessous, et ainsi de suite.

Dans la variante représentée schématiquement en figure 5, les deux fils de chaîne 18 consécutifs passent tous les deux sous une paire de fils de trame 12, 14, au-dessus de la paire suivante de fils de trame 12, 14 et ainsi de suite.

L'opération suivante consiste à réaliser une soudure des deux fils de trame 12, 14 de chaque paire dans chacune de leurs zones de contact 20, 22.

Dans ce mode de réalisation, cette soudure est effectuée au moyen d'un arc électrique déclenché entre deux électrodes 24 reliées aux bornes d'une source d'énergie électrique 26, qui est à courant alternatif avec une tension crête de l'ordre de 500 V par exemple, ou davantage. Les électrodes 24 sont disposées l'une au-dessus et l'autre au-dessous de la voie de passage des zones rapprochées 20 des paires de fils de trame et sont écartées d'une distance telle qu'un arc électrique ne se déclenche pas entre les électrodes 24 lorsqu'aucune paire de fils de trame 12, 14 n'est située entre ces électrodes. Par contre, le passage d'une paire de fils de trame entre les électrodes déclenche un arc électrique entre les électrodes. Cet arc électrique réalise la soudure des deux fils de trame 12, 14 dans leur zone de contact 20 (ou 22) et simultanément souffle la partie médiane de la zone de soudure, ce qui a pour résultat de souder les deux fils de trame et de les couper au milieu de leur soudure.

Dans les vues à plus grande échelle des figures 4 et 5, les parties soudées de deux fils de trame 12, 14 sont désignées par la référence 28. Elles sont séparées par un vide 30 qui correspond à la partie médiane de la zone de contact 20 de ces deux fils qui a été soufflée par l'arc électrique.

Les électrodes 24 sont disposées en deux rangées parallèles au-dessus et au-dessous respectivement du tissu formé par les fils de trame 12, 14 et les fils de chaîne 10, 18. Ces rangées d'électrodes s'étendent parallèlement aux fils de trame et comprennent chacune un nombre d'électrodes qui est égal au nombre de bandes parallèles de thermocouples dans le tissage plus un.

En variante, la soudure et la coupe des fils de trame 12, 14 sont réalisées au moyen d'un faisceau laser, produit par un générateur piloté par un ordinateur.

Le tissu 32 formé des fils de trame et des fils de chaîne qui est transporté au-delà des moyens de soudure est composé d'une pluralité de bandes tissées parallèles 34 qui sont séparées et indépendantes les unes des autres.

Chaque bande tissée 34 comprend une pluralité de thermocouples formés par les soudures 28 des extrémités des fils 12, 14 et reliés en série le long de la bande 34.

Selon l'invention, les fils de chaîne 10, 18 sont séparés les uns des autres d'une distance faible prédéterminée, ce qui simplifie le tissage et réduit le coût des bandes de thermocouples. Par exemple, les fils de chaîne 10 en fibre de verre peuvent avoir un diamètre de l'ordre de 0,3-0,5 millimètre, la distance entre deux fils 10 consécutifs étant d'environ 2 à 5 millimètres. Les fils de chaîne 18 en polyéthylène ou analogue ont un diamètre supérieur à celui des fils de trame, par exemple de 1,5 à 2 fois leur diamètre, et deux fils 18 consécutifs sont séparés d'une distance qui est par exemple égale à la distance entre deux fils 10 consécutifs et qui peut être supérieure, si nécessaire, pour faciliter la soudure des fils de trame.

Ces fils de trame sont par exemple des fils métalliques ayant un diamètre de l'ordre de 0,15 millimètre, la distance entre deux fils 12, 14 consécutifs étant par exemple de 0,6 millimètre.

La largeur des bandes 34 de thermocouples fabriqués selon l'invention peut être adaptée aux applications prévues de ces thermocouples, et est par exemple d'environ 15 millimètres quand leur diamètre est d'environ 0,15 millimètre.

Lorsque la largeur du tissu formé par les fils de chaîne et les fils de trame est d'environ un mètre, le nombre de bandes parallèles 34 de thermocouples fabriqués simultanément est d'environ 66.

Le pas entre thermocouples sur un même côté d'une bande 34 étant de 1,5 millimètre et la vitesse de tissage étant de 80 millimètres par minute par exemple, le procédé selon l'invention permet de fabriquer 66 bandes comprenant chacune 6400 jonctions, soit 3200 thermocouples en série par heure de tissage.

A la sortie du métier à tisser, chaque bande de thermocouples 34 est recouverte d'une bande 36 de matière électriquement isolante ayant sensiblement la même largeur que la bande de thermocouples 34, cette bande 36 étant par exemple constituée d'un tissu mince ou d'un non-tissé de fibres de verre ou analogue. L'ensemble des deux bandes 34 et 36 est ensuite enroulé sur lui-même pour former une bobine ou un rouleau 38 comportant des thermocouples à ses deux extrémités axiales.

En variante, l'ensemble des deux bandes 34, 36 peut être plié en zig-zag au lieu d'être enroulé.

Selon une autre variante, pour être protégées contre les risques de court-circuit électrique à l'enroulement ou au pliage, les jonctions formées par les extrémités soudées des fils de trame peuvent être préalablement revêtues d'une matière électriquement isolante, telle qu'un vernis ou une cire. Dans ce cas, la couche de matière qui recouvre les jonctions forme des entretoises entre les jonctions à l'enroulement et/ou au pliage de la bande, ce qui évite les risques de court-circuit entre les jonctions et rend inutiles les bandes isolantes 36.

Bien entendu, les bandes 34 de thermocouples sont coupées à longueur en fonction des applications envisagées pour constituer des rouleaux 38 comprenant un nombre prédéterminé de thermocouples en série et ayant un diamètre prédéterminé.

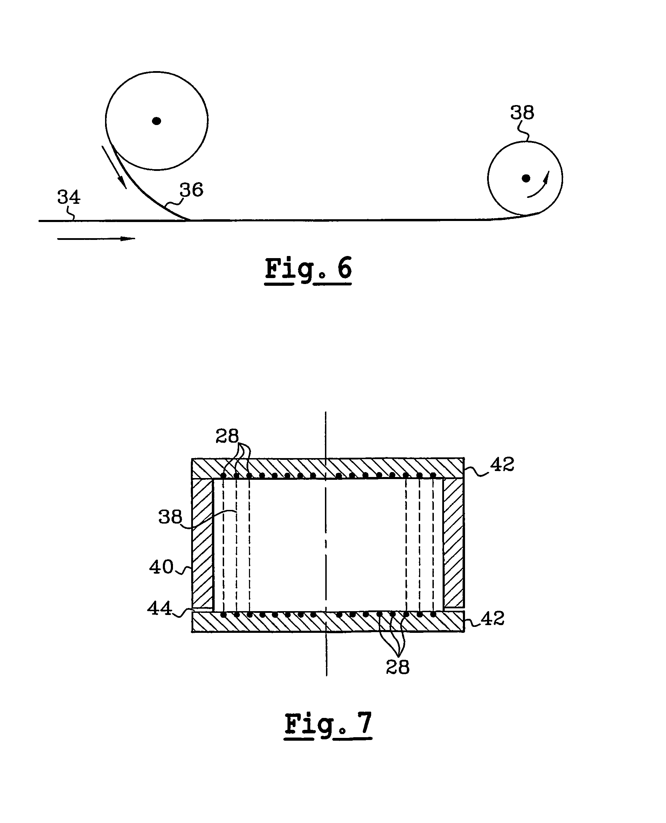

Comme représenté schématiquement en figure 7, chaque rouleau 38 peut ensuite être placé dans une enveloppe 40 de matière thermiquement isolante, et les thermocouples formés par les jonctions soudées 28 des fils de trame sont noyées dans une couche 42 de matière thermiquement et électriquement isolante.

Avantageusement, ces couches 42 constituent des radiateurs qui permettent d'améliorer l'échange de chaleur entre les jonctions 28 et le milieu extérieur.

Dans un mode de réalisation préféré de l'invention, l'enveloppe 40 et les couches 42 sont en céramique.

Il est avantageux que l'enveloppe 40 soit mécaniquement et thermiquement indépendante de la couche 42 du côté des jonctions chaudes, c'est-à-dire des jonctions qui vont être exposées à un milieu à température élevée lors de l'utilisation du convertisseur thermoélectrique. Cela permet en effet d'absorber la différence de dilatation thermique entre l'enveloppe 40 et les fils électroconducteurs 12, 14 qui constituent les thermocouples du convertisseur. Cela permet également de former une couche d'air 44 entre la couche de matière 42 dans laquelle sont noyées les jonctions chaudes 28 de thermocouple et l'extrémité correspondante de l'enveloppe 40 et donc de réduire le transfert de chaleur par l'enveloppe 40 à la couche de matière 42 dans laquelle sont noyées les jonctions froides des thermocouples.

L'enveloppe 40, qui est libre par rapport à la couche 42 comportant les jonctions chaudes, peut être solidarisée à la couche 42 comportant les jonctions froides.

Dans une variante, la bande bobinée (ou pliée) 38, comprenant ou non une bande isolante 36, est imprégnée sous vide d'une matière thermiquement et électriquement isolante du type céramique, qui est à une température comprise entre 150° et 700°C environ selon les cas, et qui durcit en refroidissant. Les jonctions soudées 28 sont de préférence noyées dans des couches 42 de matière thermiquement et électriquement isolante du type céramique avant l'imprégnation de la bande bobinée. En variante, les jonctions soudées 28 sont noyées dans la matière d'imprégnation qui peut former des radiateurs comme les couches 42 précitées.

Bien entendu, on peut aussi exécuter le procédé selon l'invention avec des fils de chaîne électroconducteurs disposés en alternance et des fils de trame en matière électriquement isolante.

## Revendications

1. - Procédé de fabrication de convertisseurs thermo-électriques comprenant des pluralités de thermocouples en série, formés par tissage de fils électroconducteurs (12, 14) de deux matières différentes parallèles et disposés en alternance, avec des fils (10) de matière électriquement isolante, **caractérisé en ce qu'**il consiste, à des intervalles prédéterminés le long des fils électroconducteurs (12, 14), à les rapprocher deux à deux, à les souder dans leurs zones de contact (20) et à les couper au niveau des soudures pour obtenir des bandes tissées parallèles (34) dans lesquelles les extrémités des fils électroconducteurs (12, 14) sont reliées en série et forment les jonctions des thermocouples.

2. - Procédé selon la revendication 1, **caractérisé en ce que** les fils électroconducteurs (12, 14) sont les fils de trame, et les fils isolants (10) sont les fils de chaîne de tissage.

3. - Procédé selon la revendication 1 ou 2, **caractérisé en ce qu'**il consiste à intercaler les fils (10) de matière électriquement isolante, à intervalles réguliers, des fils (18) d'une matière électriquement isolante et non glissante sur les fils électroconducteurs, telle qu'une matière plastique.

4. - Procédé selon la revendication 3, **caractérisé en ce qu'**il consiste à souder les fils électroconducteurs (12, 14) deux à deux entre deux fils (18) de matière isolante et non glissante, qui sont écartés l'un de l'autre d'une distance prédéterminée.

5. - Procédé selon la revendication 3 ou 4, **caractérisé en ce que** les fils électroconducteurs (12, 14) sont sans tension longitudinale.

6. - Procédé selon l'une des revendications 3 à 5, **caractérisé en ce qu'**il consiste à rapprocher les deux fils électroconducteurs (12, 14) à souder en les faisant passer du même côté d'un fil (18) de matière isolante et non-glissante.

7. - Procédé selon l'une des revendications 1 à 6, **caractérisé en ce qu'**il consiste à souder et couper les fils électroconducteurs (12, 14) dans leurs zones de contact (20) au moyen d'un arc électrique, ou par soudure laser ou par soudure au plasma.

8. - Procédé selon la revendication 7, **caractérisé en ce qu'**il consiste à faire passer le tissu (32) de fils électroconducteurs et de fils isolants entre deux rangées d'électrodes (24) reliées à une source d'énergie électrique (26) à courant alternatif, les électrodes (24) étant associées par paires de part et d'autre des zones de contact (20) des fils électroconducteurs (12, 14).

9. - Procédé selon l'une des revendications 1 à 8, **caractérisé en ce que** les fils isolants (10, 18) sont espacés les uns des autres.

10. - Procédé selon l'une des revendications précédentes, **caractérisé en ce qu'**après soudure et coupe des fils électroconducteurs (12, 14), les bandes tissées (34) sont recouvertes chacune d'une bande (36) de matière électriquement isolante et sont enroulées et/ou pliées sur elles-mêmes.

11. - Procédé selon l'une des revendications précédentes, **caractérisé en ce que**, avant enroulement et/ou pliage, au moins les extrémités soudées (28) des fils électroconducteurs (12, 14) sont recouvertes d'un produit électriquement isolant, tel que de la cire ou un vernis par exemple, après quoi les bandes tissées (34) sont pliées et/ou enroulées sur elles-mêmes.

12. - Procédé selon la revendication 10 ou 11,
**caractérisé en ce qu'**après enroulement et/ou pliage, les bandes tissées (38) sont placées dans des enveloppes (40) de matière électriquement isolante et résistante à la chaleur et les extrémités soudées (28) des fils électroconducteurs sont noyées dans une couche (42, 46) d'une matière réfractaire et électriquement isolante.

13. - Procédé selon la revendication 12, **caractérisé en ce qu'**au moins une couche (42) de matière réfractaire dans laquelle les extrémités soudées (28) des fils électroconducteurs sont noyées, est mécaniquement et thermiquement indépendante de ladite enveloppe (40).

14. - Procédé selon la revendication 10 ou 11,
**caractérisé en ce que** les bandes tissés (34) sont, après enroulement et/ou pliage, imprégnées sous vide d'une matière thermiquement et électriquement isolante du type céramique, et les jonctions soudées (28) des fils (12, 14) sont noyées dans des couches de matière isolante du type céramique.

## Claims

1. A method for manufacturing thermoelectric converters comprising pluralities of thermocouples in series, made by weaving electroconducting threads (12, 14) of two different natures, parallel and arranged alternately, with threads (10) made of an electrically insulating material, **characterized in that** it consists, at predetermined intervals along electroconducting threads (12, 14), in moving them together two by two, in welding them in their contact zones (20) and in cutting them at the level of the welds so as to obtain parallel cloth strips (34) wherein the ends of electroconducting threads (12, 14) are connected in series and form the junctions of the thermocouples.

2. A method as claimed in claim 1, **characterized in that** electroconducting threads (12, 14) are the weft threads and insulating threads (10) are the warp threads.

3. A method as claimed in claim 1 or 2, **characterized in that** it consists in interposing threads (10) made of an electrically insulating material, at regular intervals, in threads (18) made of an electrically insulating material that does not slide on the electroconducting threads, such as a plastic material.

4. A method as claimed in claim 3, **characterized in that** it consists in welding electroconducting threads (12, 14) two by two between two threads (18) made of an insulating and non-sliding material, which are separated from one another by a predetermined distance.

5. A method as claimed in claim 3 or 4, **characterized in that** electroconducting threads (12, 14) are without longitudinal tension.

6. A method as claimed in any one of claims 3 to 5, **characterized in that** it consists in moving the two electroconducting threads (12, 14) to be welded together by passing them on the same side of a thread (18) made of an insulating and non-sliding material.

7. A method as claimed in any one of claims 1 to 6, **characterized in that** it consists in welding and cutting electroconducting threads (12, 14) in their contact zones (20) by means of an electric arc, or by laser welding or plasma welding.

8. A method as claimed in claim 7, **characterized in that** it consists in passing cloth (32) consisting of electroconducting threads and of insulating threads between two rows of electrodes (24) connected to an alternating-current power supply (26), electrodes (24) being associated in pairs on either side of the contact zones (20) of electroconducting threads (12, 14).

9. A method as claimed in any one of claims 1 to 8, **characterized in that** insulating threads (10, 18) are spaced out in relation to one another.

10. A method as claimed in any one of the previous claims, **characterized in that**, after welding and cutting electroconducting threads (12, 14), the woven strips (34) are coated each with a strip (36) made of an electrically insulating material and they are wound and/or folded.

11. A method as claimed in any one of the previous claims, **characterized in that**, before winding and/or folding, at least the welded ends (28) of electroconducting threads (12, 14) are coated with an electrically insulating product such as wax or a varnish for example, and after that woven strips (34) are folded and/or wound.

12. A method as claimed in claim 10 or 11, **characterized in that**, after winding and/or folding, woven strips (38) are placed in sheaths (40) made of an electrically insulating and heat-resisting material, and welded ends (28) of the electroconducting threads are embedded in a layer (42, 46) of a heat-resisting and electrically insulating material.

13. A method as claimed in claim 12, **characterized in that** at least one layer (42) of heat-resisting material wherein welded ends (28) of the electroconducting threads are embedded is mechanically and thermally independent of said sheath (40).

14. A method as claimed in claim 10 or 11, **characterized in that**, after winding and/or folding, woven strips (34) are vacuum impregnated with a thermally and electrically insulating material of ceramic type, and the welded junctions (28) of threads (12, 14) are embedded in layers of insulating material of ceramic type.

## Patentansprüche

1. Verfahren zur Herstellung thermoelektrischer Umwandler umfassend eine Mehrzahl von Thermoelementen in Serie, die durch Verweben von elektrisch leitenden Drähten (12, 14) aus zwei unterschiedlichen Materialien, die parallel und abwechselnd angeordnet sind, mit Drähten (10) aus elektrisch isolierendem Material ausgebildet werden, **dadurch gekennzeichnet, dass** es umfasst: in vorgegebenen Intervallen entlang der elektrisch leitenden Drähte (12, 14), paarweises Annähern der Drähte, Verlöten in ihren Kontaktzonen (20) und Abschneiden auf Höhe der Lötstellen, so dass parallele Gewebebänder (34) erhalten werden, bei denen die Enden der elektrisch leitenden Drähte (12, 14) in Serie verbunden sind und die Verbindungen der Thermoelemente bilden.

2. Verfahren nach Anspruch 1, **dadurch gekennzeichnet, dass** die elektrisch leitenden Drähte (12, 14) die Schussfäden und die isolierenden Drähte (10) die Kettfäden des Gewebes bilden.

3. Verfahren nach Anspruch 1 oder 2, **dadurch gekennzeichnet, dass** es ein Einfügen von Drähten (18) aus einem elektrisch isolierenden und auf den elektrisch leitenden Drähten nicht gleitfähigen Material, wie einem Kunststoffmaterial, zwischen Drähte (10) aus elektrisch isolierendem Material in regelmäßigen Intervallen umfasst.

4. Verfahren nach Anspruch 3, **dadurch gekennzeichnet, dass** es Verlöten der elektrisch leitenden Drähte (12, 14) paarweise zwischen zwei Drähten (18) aus isolierendem und nicht gleitfähigem Material, die voneinander um einen vorgegebenen Abstand beabstandet sind, umfasst.

5. Verfahren nach Anspruch 3 oder 4, **dadurch gekennzeichnet, dass** die elektrisch leitenden Drähte (12, 14) keine Längsspannung aufweisen.

6. Verfahren nach einem der Ansprüche 3 bis 5, **dadurch gekennzeichnet, dass** es Annähern der beiden zu verlötenden elektrisch leitenden Drähte (12, 14) in der Weise umfasst, dass sie von der gleichen Seite eines Drahts (18) aus isolierendem und nicht gleitfähigem Material geführt werden.

7. Verfahren nach einem der Ansprüche 1 bis 6, **dadurch gekennzeichnet, dass** es Verlöten und Schneiden der elektrisch leitenden Drähte (12, 14) in ihren Kontaktzonen (20) mittels eines elektrischen Bogens oder durch Laserlöten oder durch Plasmalöten umfasst.

8. Verfahren nach Anspruch 7, **dadurch gekennzeichnet, dass** es Durchführen des Gewebes (32) aus elektrisch leitenden Drähten und isolierenden Drähten zwischen zwei Reihen von Elektroden (24), die mit einer elektrischen Wechselstrom-Energiequelle (26) verbunden sind, umfasst, wobei die Elektroden (24) paarweise zu beiden Seiten der Kontaktzonen (20) der elektrisch leitenden Drähte (12, 14) zugeordnet werden.

9. Verfahren nach einem der Ansprüche 1 bis 8, **dadurch gekennzeichnet, dass** die isolierenden Drähte (10, 18) voneinander beabstandet sind.

10. Verfahren nach einem der vorhergehenden Ansprüche, **dadurch gekennzeichnet, dass** nach Verlöten und Schneiden der elektrisch leitenden Drähte (12, 14) die Gewebebänder (34) jeweils mit einem Streifen (36) aus elektrisch isolierendem Material bedeckt werden und auf sich zusammengerollt und/oder zusammengefaltet werden.

11. Verfahren nach einem der vorhergehenden Ansprüche, **dadurch gekennzeichnet, dass** vor Aufrollen und/oder Falten mindestens die verlöteten Enden (28) der elektrisch leitenden Drähte (12, 14) mit einem elektrisch isolierenden Produkt bedeckt werden, wie beispielsweise einem Wachs oder Lack, wonach die Gewebebänder (34) auf sich zusammengefaltet und/oder zusammengerollt werden.

12. Verfahren nach Anspruch 10 oder 11, **dadurch gekennzeichnet, dass** nach Aufrollen und/oder Falten die Gewebebänder (38) in Umhüllungen (40) aus elektrisch isolierendem und wärmebeständigem Material platziert und die verlöteten Enden (28) der elektrisch leitenden Drähte in eine Schicht (42, 46) aus einem hitzebeständigen und elektrisch isolierenden Material versenkt werden.

13. Verfahren nach Anspruch 12, **dadurch gekennzeichnet, dass** mindestens eine Schicht (42) aus hitzebeständigem Material, in der die verlöteten Enden (28) der elektrisch leitenden Drähte versenkt werden, mechanisch und thermisch von der Umhüllung (40) unabhängig ist.

14. Verfahren nach Anspruch 10 oder 11, **dadurch gekennzeichnet, dass** die Gewebebänder (34) nach Aufrollen und/oder Falten im Vakuum mit einem thermisch und elektrisch isolierenden Material vom Typ einer Keramik imprägniert werden, und die verlöteten Enden (28) der Drähte (12, 14) in Schichten aus isolierendem Material vom Typ einer Keramik versenkt werden.
